# EUROPEAN PATENT APPLICATION

(11) **EP 4 819 745 A1**
(43) Date of publication of application: **07.10.2026**
(21) Application number: 24895578.3
(22) Date of filing: 20.06.2024
(51) Int. Cl.: H04W 72/566

(54) **DATA TRANSMISSION METHOD, COMMUNICATION APPARATUS, AND STORAGE MEDIUM**

(30) Priority: 01.12.2023 CN 202311653126
(71) Applicant: ZTE CORPORATION, Shenzhen, Guangdong 518057 (CN)
(72) Inventor: LIU, Yu, Shenzhen, Guangdong 518057 (CN); XIE, Feng, Shenzhen, Guangdong 518057 (CN); WANG, Fei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/100268
(87) International publication number: WO 2025/112475

(57) **Abstract**

The present disclosure relates to the technical field of wireless communications. Provided are a data transmission method, a communication apparatus, and a storage medium. The method comprises: determining the priority of an HARQ process; and on the basis of the priority of the HARQ process, generating data to be transmitted for the HARQ process.

## Description

### CROSS-REFERENCE

The present disclosure claims priority to Chinese Patent Application No. 202311653126.4, filed with the China Patent Office on December 1, 2023, and entitled "Data Transmission Method, Communication Apparatus, and Storage Medium", the entire contents of which are incorporated herein by reference.

### TECHNICAL FIELD

The present disclosure relates to the technical field of wireless communications, and in particular, to a data transmission method, a communication apparatus, and a storage medium.

### BACKGROUND

A hybrid automatic repeat request (HARQ) is a technology that combines an automatic repeat request (ARQ) and a forward error correction (FEC), which can provide better anti-interference and anti-fading performance, and thus, improve system throughput, and enhance data transmission reliability.

In the related art, data transmission is divided into uplink data transmission and downlink data transmission. For uplink data transmission, after receiving a grant of downlink control information (DCI) is received, a user equipment (UE) perform packet assembly according to priorities of logical channels (LCH), and then sends data according to a HARQ process indicated by the DCI. Therefore, for newly transmitted data, it can be ensured that data with a high priority is first sent. However, for re-transmission data, if retransmission data of multiple HARQ processes exist, a situation may occur where retransmission data of a high-priority HARQ process is scheduled later than re-transmission data of a low-priority HARQ process, thereby affecting reliability of the re-transmission data of the HARQ processes, and further, affecting user service experience. For downlink data transmission, a similar situation may also occur when a base station schedules retransmission data of HARQ processes.

### SUMMARY

Embodiments of the present disclosure provide a data transmission method, a communication apparatus, and a storage medium, which can enable high-priority retransmission data to be preferentially scheduled, thereby improving reliability of retransmission data of an HARQ process.

In an aspect, there is provided a data transmission method, applied to a first node, including: determining a priority of a HARQ process; and generating to-be-transmitted data of the HARQ process according to the priority of the HARQ process.

In another aspect, there is provided a data transmission method, applied to a second node, including: acquiring a priority of a HARQ process; and scheduling retransmission data of the HARQ process according to the priority of the HARQ process.

In yet another aspect, there is provided a data transmission apparatus, applied to a first node, including: a determination module, configured to determine a priority of a HARQ process; and a processing module, configured to generate to-be-transmitted data of the HARQ process according to the priority of the HARQ process.

In yet another aspect, there is provided a data transmission apparatus, applied to a second node, including: a determination module, configured to acquire a priority of a HARQ process; and a communication module, configured to schedule re-transmission data of the HARQ process according to the priority of the HARQ process.

In yet another aspect, there is provided a communication apparatus, including: a memory and a processor, wherein the memory and the processor are coupled; the memory is configured to store a computer program; and the processor, upon executing the computer program, implements the data transmission method described in any one of the above embodiments.

In yet another aspect, there is provided a computer-readable storage medium, having computer program instructions stored thereon, wherein the computer program instructions, upon being executed by a processor, implement the data transmission method described in any one of the above embodiments.

In yet another aspect, there is provided a computer program product, including computer program instructions, wherein the computer program instructions, upon being executed by a processor, implement the data transmission method described in any one of the above embodiments.

### BRIEF DESCRIPTION OF THE DRAWINGS

To describe the technical solutions in the present disclosure more clearly, the drawings required for some embodiments of the present disclosure will be briefly introduced below. It is apparent that the drawings described below are merely drawings of some embodiments of the present disclosure, and for a person of ordinary skill in the art, other drawings may also be obtained based on these drawings.
FIG. 1 is a schematic architectural diagram of a communication system provided by some embodiments of the present disclosure;
FIG. 2 is a first flowchart of a data transmission method provided by some embodiments of the present disclosure;
FIG. 3 is a second flowchart of a data transmission method provided by some embodiments of the present disclosure;
FIG. 4 is a third flowchart of a data transmission method provided by some embodiments of the present disclosure;
FIG. 5 is a fourth flowchart of a data transmission method provided by some embodiments of the present disclosure;
FIG. 6 is a first structural schematic diagram of a data transmission apparatus provided by some embodiments of the present disclosure;
FIG. 7 is a second structural schematic diagram of a data transmission apparatus provided by some embodiments of the present disclosure; and
FIG. 8 is a structural schematic diagram of a communication apparatus provided by some embodiments of the present disclosure.

### DETAILED DESCRIPTION

The technical solutions in the present disclosure will be described clearly and completely below with reference to the drawings in the present disclosure. Apparently, the described embodiments are only a part of the embodiments of the present disclosure, rather than all the embodiments. Based on the embodiments in the present disclosure, all other embodiments obtained by a person of ordinary skill in the art without making creative efforts fall within the protection scope of the present disclosure.

It should be noted that, in the present disclosure, wordings such as "exemplary" or "for example" are used to represent giving an example, an illustration, or a description. Any embodiment or design scheme described as "exemplary" or "for example" in the present disclosure should not be construed as being more preferred or more advantageous than other embodiments or design schemes. Rather, the usage of wordings such as "exemplary" or "for example" is intended to present related concepts in a specific manner.

In the following, terms "first" and "second" are used for descriptive purposes only, and cannot be understood as indicating or implying relative importance or implicitly specifying the number of indicated technical features. Thus, a feature defined by "first" or "second" may explicitly or implicitly include one or more of such features.

In the description of the present disclosure, unless otherwise specified, "/" means "or". For example, A/B may mean A or B. "And/or" in this document is merely an association relationship describing associated objects, indicating that three relationships may exist. For example, A and/or B may indicate three situations: A alone, both A and B, and B alone. In addition, "at least one" means one or more, and "a plurality of" means two or more.

As described in the Background, data transmission is divided into uplink data transmission and downlink data transmission. For uplink data transmission, after receiving a grant of downlink control information (DCI) is received, a UE perform packet assembly according to priorities of LCHs (i.e., perform packet assembly for data of high-priority LCHs first), and then sends the data according to a HARQ process indicated by the DCI. Therefore, for newly transmitted data, it can be ensured that data with a high priority is first sent. However, for re-transmission data, a current communication system can only ensure that re-transmission data of a HARQ process is scheduled earlier than newly transmitted data. However, for a situation where re-transmission data of multiple HARQ processes exist, the current communication system cannot perform priority scheduling, and a situation may occur where re-transmission data of a high-priority HARQ process is scheduled later than re-transmission data of a low-priority HARQ process, thereby affecting reliability of the re-transmission data of the HARQ processes, and further affecting user service experience. For downlink data transmission, when scheduling re-transmission data of HARQ processes, the base station also cannot directly distinguish the priorities of the re-transmission data of the HARQ processes, affecting reliability of the re-transmission data of the HARQ processes.

To address the above technical problem, embodiments of the present disclosure provide a data transmission method, the idea of which lies in: determining a priority of a HARQ process; and generating to-be-transmitted data of the HARQ process according to the priority of the HARQ process. Thus, to-be-transmitted data can be scheduled according to the priority of the HARQ process. Further, when transmission of the to-be-transmitted data fails, re-transmission data can also be scheduled according to the priority of the HARQ process, so that high-priority re-transmission data is preferentially scheduled, thereby improving reliability of the re-transmission data of the HARQ process.

The technical solutions of the embodiments of the present disclosure may be used in various communication systems. The communication system may be a third Generation Partnership Project (3GPP) communication system, for example, a Long Term Evolution (LTE) system, or may be a fifth Generation (5G) mobile communication system, a New Radio (NR) system, a New Radio Vehicle to Everything (NR V2X) system, or may also be applied to a system with LTE and 5G hybrid networking, or a device-to-device (D2D) communication system, a machine-to-machine (M2M) communication system, an Internet of Things (IoT) communication system, and other next-generation communication systems, or may also be a non-3GPP communication system, which is not limited.

The technical solutions of the embodiments of the present disclosure may be applied to various communication scenarios, for example, may be applied to one or more of the following communication scenarios: communication scenarios such as enhanced mobile broadband (eMBB), ultra reliable low latency communication (URLLC), machine type communication (MTC), massive machine type communications (mMTC), D2D, V2X, and IoT.

The system architecture of the communication system in the embodiments of the present disclosure may at least include a first communication node and a second communication node. It should be understood that, in this example, in downlink, the first communication node may be a network side device (for example, including but not limited to an access network device), and the second communication node may be a terminal side device (for example, including but not limited to a terminal). In a case where two communication nodes is in device-to-device communication, the first communication node and the second communication node may both be base stations or terminals. The first communication node and the second communication node may be respectively referred to as a first node and a second node.

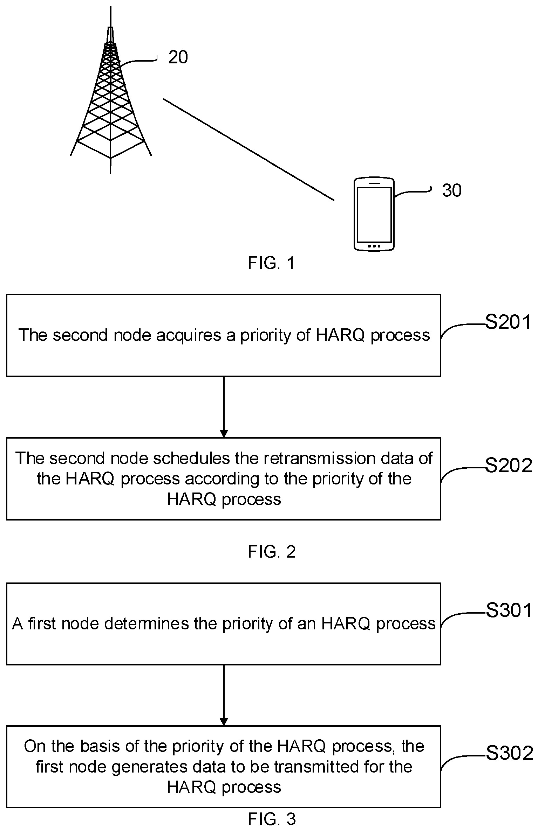

Exemplarily, taking the first node as a terminal and the second node as an access network device as an example, FIG. 1 shows a schematic network architecture diagram of a communication system provided by the embodiments of the present disclosure. As shown in FIG. 1, the communication system includes an access network device 20, and a terminal 30 connected to the access network device. The access network device 20 may cover one or more cells, and the terminal 30 may move within a cell covered by the access network device 20 or move between cells, and receive a network service provided by the access network device 20.

The access network device 20 involved in the present disclosure is a device in a radio access network (RAN) that connects a terminal to a wireless network. The RAN may be connected to a core network (for example, a core network may be a core network of LTE, or may be a core network of 5G, etc.). The access network device 20 may be a satellite base station (or a flight platform) in an NTN scenario, an evolved Node B (Evolutional Node B, eNB or eNodeB) in LTE, or a base station in 5G network or a future evolved public land mobile network PLMN), a broadband network gateway (BNG), an aggregation switch or a non-3GPP access device; or the access network device 20 in the embodiments of the present disclosure may also be a wireless controller in a cloud radio access network (CRAN); or a transmission and reception point (TRP), or a device including a TRP, etc. The embodiments of the present disclosure are not specifically limited in this regard. Optionally, the base station in the embodiments of the present disclosure may include various forms of base stations, e.g.: a macro base station, a micro base station (also referred to as a small station), a relay station, an access point, etc. The embodiments of the present disclosure are not specifically limited in this regard.

In some embodiments, both the access network device 20 and the terminal 30 may also be referred to as a communication apparatus, which may be a general device or a dedicated device. The embodiments of the present disclosure are not specifically limited in this regard.

In some embodiments, the terminal 30 may be a device with a wireless transceiving function, which may be deployed on land, including indoor or outdoor, handheld, wearable, or vehicle-mounted; may also be deployed on water (such as a ship); and may also be deployed in the air (for example, on an airplane, a balloon, or a satellite, etc.). The terminal may be a mobile phone, a tablet computer (Pad), a computer with a wireless transceiving function, a virtual reality (VR) terminal, an augmented reality (AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, and the like. The embodiments of the present disclosure do not limit the application scenarios. The terminal 30 may also sometimes be referred to as a user, a UE, an access terminal, a UE unit, a UE station, a mobile station, a mobile platform, a remote station, a remote terminal, a mobile device, a UE terminal, a wireless communication device, a UE proxy, or a UE apparatus, etc. The embodiments of the present disclosure are not limited in this regard.

It should be noted that FIG. 1 is only an exemplary framework diagram. A number of devices included in FIG. 1, and the names of the devices are not limited. Moreover, in addition to the devices shown in FIG. 1, the wireless communication system may also include other devices, such as a core network device.

It can be understood that the application scenarios of the embodiments of the present disclosure are not limited. The system architecture and the service scenarios described in the embodiments of the present disclosure are intended to more clearly illustrate the technical solutions of the embodiments of the present disclosure, and do not constitute a limitation on the technical solutions provided by the embodiments of the present disclosure. A person of ordinary skill in the art may know that, with the evolution of the network architecture and the emergence of new service scenarios, the technical solutions provided by the embodiments of the present disclosure are equally applicable to similar technical problems.

It can be understood that, in the embodiments of the present disclosure, the terminal 30 and/or the access network device 20 may perform some or all of the steps in the embodiments of the present disclosure. These steps or operations are only examples, and the embodiments of the present disclosure may also perform other operations or variations of various operations. In addition, various steps may be performed in a different order presented in the embodiments of the present disclosure, and it may not be necessary to perform all the operations in the embodiments of the present disclosure.

It should be noted that the execution subject of the data transmission method provided by the embodiments of the present disclosure is not limited. For example, the method may be applied to the communication system as shown in FIG. 1, and executed by the access network device 20 or the terminal 30; or, the method may also be applied to an end-to-end system architecture, and executed by a terminal of the end-to-end system.

The data transmission method provided by the embodiments of the present disclosure will be specifically introduced below.

The present disclosure provides a data transmission method, applied to a second node. As shown in FIG. 2, the method at least includes S201, and S202;

In S201: the second node acquires a priority of HARQ process.

In some embodiments, the priority of the HARQ process priority may be determined by a first node and reported to the second node. Exemplarily, the above S201 may be implemented as the following steps:
In a1: the first node determines the priority of the HARQ process priority.

In a2: the first node sends a first message to the second node; correspondingly, the second node receives the first message sent from the first node.

The first message includes the priority of the HARQ process. Exemplarily, the first message may be uplink control information (UCI), and the priority of the HARQ process is indicated by adding a HARQ priority information (HPI) field in the UCI. For example, the HPI field may occupy 4 bits, where a value may be from 0 to 15. A smaller value indicates a higher priority.

Exemplarily, when the first node performs packet assembly of data for HARQ1 process, assuming that the assembled data is high-priority data, when the first message is configured, the first node configures the HPI field to a smaller value. In this way, after receiving the first message, the second node may acquire the priority of the HARQ process according to the value of the HPI field.

As a possible implementation, the first message is transmitted via a physical uplink shared channel (PUSCH). Exemplarily, the first message may be multiplexed on the PUSCH for transmission. For example, the first message and to-be-transmitted data of the first node are transmitted simultaneously on the same PUSCH.

As another possible implementation, the first message is transmitted via a physical uplink control channel (PUCCH).

In some embodiments, before the above a2, the above method further includes the following b1:
In b1: the second node sends a second message to the first node; correspondingly, the first node receives the second message sent from the second node.

Herein, the second message is used to indicate whether the first node reports the priority of the HARQ process. Exemplarily, the second message may be DCI0, and then, whether the first node reports the priority of the HARQ process is indicated by adding a HARQ priority report indication (HPRI) field in DCI0.

Exemplarily, the HPRI field occupies 1 bit. If the value of the HPRI field is 1, it indicates that the first node is instructed to report the priority of the HARQ process (for example, the priority of the HARQ process may be reported via a corresponding PUSCH); if the value of the HPRI field is 0, it indicates that the first node is instructed not to report the priority of the HARQ process.

Thus, the above a2 may be implemented as: in a case where the second message indicates the first node to report the priority of the HARQ process, the first node sends the first message to the second node.

In some embodiments, before the above b1, the above method further includes the following b0:
In b0: the second node sends a third message to the first node; correspondingly, the first node receives the third message sent from the second node.

Herein, the third message is used to indicate whether the first node is allowed to report the priority of the HARQ process. Exemplarily, the above third message may be radio resource control (RRC) signaling, and whether the first node is allowed to report the priority of the HARQ process is indicated by a configuration parameter in the third message. Exemplarily, the configuration parameter may be a PUSCH configuration parameter (PUSCH-Config), and whether the first node is allowed to report the priority of the HARQ process is indicated by a bandwidth part (BWP) level parameter of the first node in the PUSCH-Config; or, the configuration parameter may be a PUSCH serving cell configuration parameter (PUSCH-ServingCellConfig), and whether the first node is allowed to report the priority of the HARQ process is indicated by a cell-level parameter of the first node in the PUSCH-ServingCellConfig; or, the configuration parameter may be a media access control (MAC) layer cell group configuration parameter (MAC-CellGroupConfig) or a physical cell group configuration parameter (PhysicalCellGroupConfig), and whether the first node is allowed to report the priority of the HARQ process is indicated by a cell group level parameter of the first node in the MAC-CellGroupConfig or the PhysicalCellGroupConfig; or, the configuration parameter may be a system information block type 1 (SIB1), and whether the first node is allowed to report the priority of the HARQ process is indicated by a common cell-level parameter in the SIB1.

As a possible implementation, the first node may determine whether to report the priority of the HARQ process to the second node according to an indication of the third message sent from the second node. Then, the above a2 may be implemented as: in a case where the third message is used to indicate that the first node is allowed to report the priority of the HARQ process,the first node sends the first message to the second node.

Exemplarily, in a case where the first node does not receive the second message, or in a case where the first node receives the second message, but the HPRI field is not added in the second message, the first node determines, according to the indication of the third message, whether to report the priority of the HARQ process to the second node.

As another possible implementation, the first node may determine, according to indications of the second message and the third message sent from the second node, whether to report the priority of the HARQ process to the second node. Then, the above a2 may further be implemented as: in a case where the third message is used to indicate that the first node is allowed to report the priority of the HARQ process, the first node sends the first message to the second node in response to the second message.

Exemplarily, the first node may determine, according to the indication of the third message sent from the second node, whether the second message contains the HPRI field. For example, in a case where the third message is used to indicate that the first node is allowed to report the priority of the HARQ process, the second message contains the HPRI field; in a case where the third message is used to indicate that the first node is not allowed to report the priority of the HARQ process, the second message does not contain the HPRI field.

In some embodiments, the above S201 may further be implemented as: the second node configures the priority of the HARQ process.

As a possible implementation, the second node may configure the priority of the HARQ process according to an HARQ ID.

Exemplarily, the second node may flexibly configure one or more priority levels. For example, the second node may configure three levels of HARQ priorities (High, Middle, Low). Multiple HARQ IDs may be configured in each priority level, and the same HARQ ID can only appear in one priority level. For example, the HARQ process priorities configured by the second node are as follows:
High: HARQ ID 0, HARQ ID 1;
Middle: HARQ ID 2, HARQ ID 3, HARQ ID 4, HARQ ID 5;
Low: HARQ ID 6, HARQ ID 7.

In some embodiments, in a case where the priority of the HARQ process is configured by the second node, the above method further includes: the second node sends a fourth message to the first node; correspondingly, the first node receives the fourth message sent from the second node.

The fourth message includes the priority of the HARQ process. Exemplarily, the above fourth message may be an RRC signaling, and the HARQ process priority information is indicated by a configuration parameter in the fourth message. Exemplarily, the configuration parameter may be a PUSCH-Config, and the HARQ process priority information is indicated by a BWP level parameter of the first node in the PUSCH-Config; or, the configuration parameter may be a PUSCH-ServingCellConfig, and the HARQ process priority information is indicated by a cell-level parameter of the first node in the PUSCH-ServingCellConfig; or, the configuration parameter may be a MAC-CellGroupConfig or a PhysicalCellGroupConfig, and the HARQ process priority information is indicated by a cell group level parameter of the first node in the MAC-CellGroupConfig or the PhysicalCellGroupConfig; or, the configuration parameter may be a SIB1, and the HARQ process priority information is indicated by a common cell-level parameter in the SIB1.

In some embodiments, the above S201 may further be implemented as: the priority of the HARQ process is determined based on a predefined rule.

Exemplarily, the predefined rule may be: the priority of the HARQ process is related to a value of a HARQ ID. For example, the smaller the HARQ ID, the higher the priority of a corresponding HARQ process.

In S202: the second node schedules the re-transmission data of the HARQ process according to the priority of the HARQ process.

In some embodiments, re-transmission data of a high-priority HARQ process is scheduled earlier than re-transmission data of a low-priority HARQ process. For example, a transmission resource for re-transmission data of a high-priority HARQ process is earlier in time domain than a transmission resource for re-transmission data of a low-priority HARQ process. Thus, high-priority re-transmission data can be preferentially scheduled, thereby improving reliability of the re-transmission data of the HARQ process.

In some embodiments, the above S202 may be implemented as: the second node configures a transmission resource for re-transmission data of the HARQ process according to the priority of the HARQ process, and then the second node receives or sends the re-transmission data of the HARQ process on the transmission resource for the re-transmission data of the HARQ process.

Exemplarily, for uplink re-transmission data, the second node receives the retransmission data of the HARQ process on the transmission resource for the retransmission data of the HARQ process; for downlink re-transmission data, the second node sends the re-transmission data of the HARQ process on the transmission resource for the re-transmission data of the HARQ process.

In some embodiments, the above method further includes: sending a fifth message to the first node, wherein the fifth message includes configuration information of the transmission resource for the re-transmission data of the HARQ process.

The present disclosure provides a data transmission method, applied to a first node. As shown in FIG. 3, the method at least includes S301, and S302;
In S301: the first node determine a priority of a HARQ process.

In some embodiments, the priority of the HARQ process is determined by one of the following ways:
the first node determines and reports the priority of the HARQ process; a fourth message sent from a second node is received, wherein the fourth message includes the priority of the HARQ process; the priority of the HARQ process is determined based on a predefined rule.

Exemplarily, for the determination method for the priority of the HARQ process, reference may be made to the description in the above S201, and details are not repeated herein.

In S302: the first node generates to-be-transmitted data of the HARQ process according to the priority of the HARQ process.

Exemplarily, the to-be-transmitted data of the HARQ process is newly transmitted data.

In some embodiments, the first node performs data packet assembly based on the priority of the HARQ process and priorities of multiple logical channels, to determine the to-be-transmitted data of the HARQ process. Thus, it can be ensured that high-priority data is preferentially assembled, improving reliability of transmission data of the HARQ process.

In some embodiments, the above method further includes that: the first node sends the to-be-transmitted data of the HARQ process.

Exemplarily, in a case where the to-be-transmitted data of the HARQ process is newly transmitted data, the second node determines a transmission resource for the newly transmitted data of the HARQ process and sends the transmission resource to the first node, and then the first node sends the newly transmitted data of the HARQ process on the transmission resource for the newly transmitted data of the HARQ process.

When transmission of the newly transmitted data of the HARQ process is erroneous, the second node schedules the re-transmission data of the HARQ process according to the priority of the HARQ process. Herein, a transmission resource for the retransmission data of the HARQ process may be determined according to the priority of the HARQ process, that is, re-transmission data of a high-priority HARQ process is scheduled earlier than re-transmission data of a low-priority HARQ process. For example, the transmission resource for re-transmission data of a high-priority HARQ process is earlier in time domain than the transmission resource for re-transmission data of a low-priority HARQ process.

In some embodiments, the above determining, by the first node, the transmission resource for the re-transmission data of the HARQ process may be implemented as the following steps:
In c1: the first node receives a fifth message sent from the second node.

The fifth message includes configuration information of the transmission resource for the re-transmission data of the HARQ process.

In c2: the first node determines the transmission resource for the re-transmission data of the HARQ process based on the fifth message.

It can be understood that the second node may configure the transmission resource for the re-transmission data of the HARQ process according to the priority of the HARQ process, and send the configuration information of the transmission resource to the first node. Thus, the first node may receive or send the re-transmission data of the HARQ process on the transmission resource for the re-transmission data of the HARQ process, so that high-priority re-transmission data can be preferentially scheduled, thereby improving reliability of the re-transmission data of the HARQ process.

It should be noted that, for uplink re-transmission data, the first node sends the re-transmission data of the HARQ process on the transmission resource for the retransmission data of the HARQ process; for downlink re-transmission data, the first node receives the re-transmission data of the HARQ process on the transmission resource for the re-transmission data of the HARQ process.

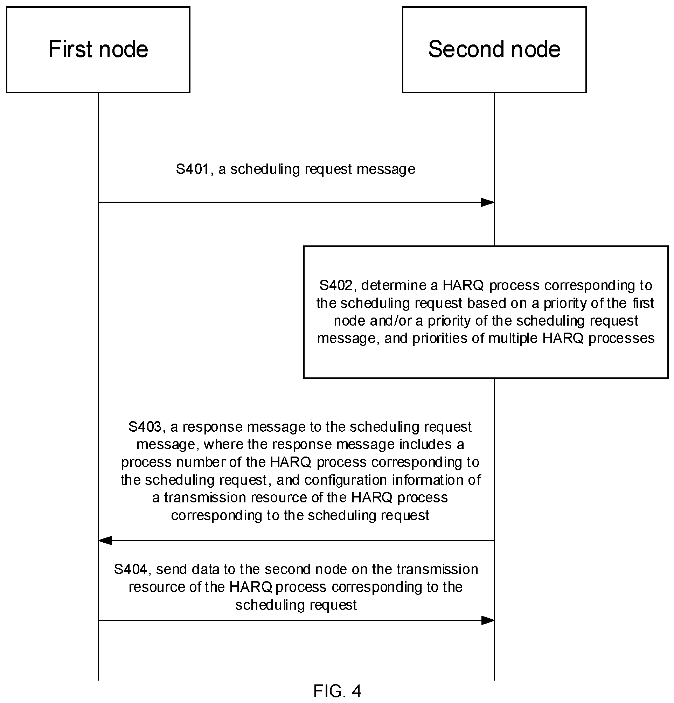

In some embodiments, for uplink newly transmitted data, the second node may also allocate HARQ processes to multiple first nodes according to priorities of the HARQ processes. Exemplarily, as shown in FIG. 4, the above method further at least includes S401 to S404:
In S401: the first node sends a scheduling request message to the second node; correspondingly, the second node receives the scheduling request message sent from the first node.

The above scheduling request message is a scheduling request (SR) message, used to apply for a transmission resource for the first node.

In S402: the second node determines a HARQ process corresponding to the scheduling request based on a priority of the first node and/or a priority of the scheduling request message, and priorities of multiple HARQ processes.

Exemplarily, in a case where the second node simultaneously receives scheduling request messages from multiple first nodes, the second node determines a HARQ process corresponding to the scheduling request of each first node according to the priorities of the multiple first nodes and the priorities of the scheduling requests. For example, in a case where the priorities of the scheduling requests are the same, a low-priority HARQ process is allocated to a scheduling request of a low-priority first node, and a high-priority HARQ process is allocated to a scheduling request of a high-priority first node.

Exemplarily, in a case where the second node simultaneously receives scheduling request messages from multiple first nodes, and the priorities of the multiple first nodes are the same, the second node determines a HARQ process corresponding to each scheduling request according to the priorities of the multiple scheduling requests. For example, in a case where the priorities of two UEs are the same, if SRs from the two UEs are received simultaneously, according to the priorities of the SRs, a high-priority SR is allocated a high-priority HARQ process, and a low-priority SR is allocated a low-priority HARQ process.

Exemplarily, in a case where the second node simultaneously receives multiple scheduling requests from the same first node, the second node determines a HARQ process corresponding to each scheduling request according to the priorities of the multiple scheduling requests. For example, a low-priority HARQ process is allocated to a low-priority scheduling request, and a high-priority HARQ process is allocated to a high-priority scheduling request.

In S403: the second node sends a response message to the scheduling request message to the first node; correspondingly, the first node receives the response message to the scheduling request message sent from the second node.

Herein, the response message includes a process number (i.e., HARQ ID) of the HARQ process corresponding to the scheduling request, and configuration information of a transmission resource of the HARQ process corresponding to the scheduling request.

In S404: the first node sends data to the second node on the transmission resource of the HARQ process corresponding to the scheduling request; correspondingly, the second node receives the data sent by the first node on the transmission resource of the HARQ process corresponding to the scheduling request.

From the above, it can be seen that, for uplink newly transmitted data, the second node may also allocate HARQ processes to multiple first nodes according to priorities of the HARQ processes. Thus, a high-priority HARQ process can be allocated to a high-priority terminal or scheduling request, thereby improving reliability of newly transmitted data of the HARQ process.

For ease of understanding, different implementations of the data transmission method provided by the embodiments of the present disclosure are described below in the form of examples.

For ease of description, in the following examples, the first node is a UE, and the second node is a base station.

Implementation 1: the UE determines a priority of a HARQ process and reports the priority to the base station.

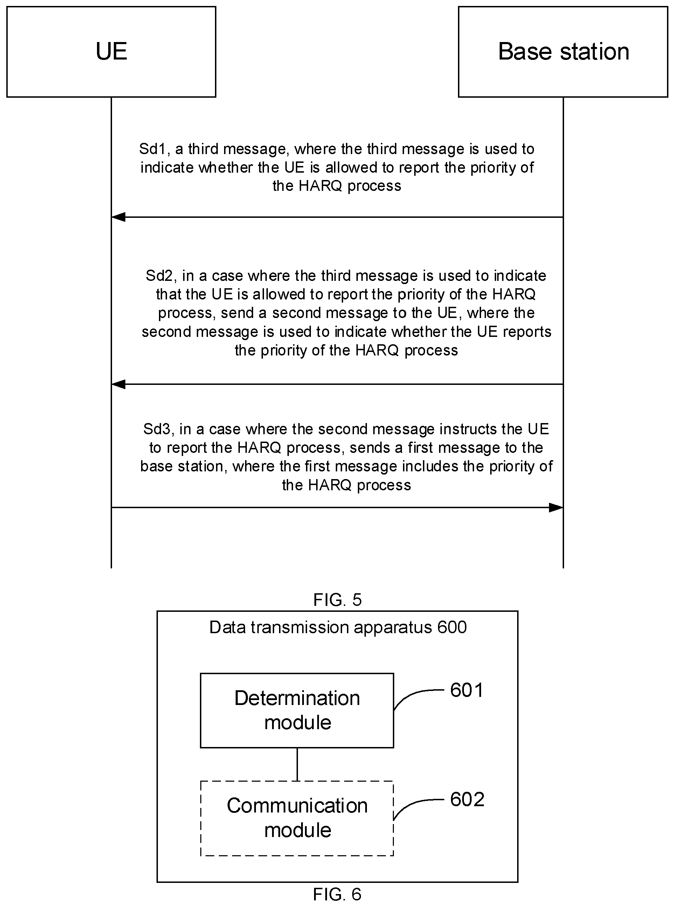

Exemplarily, as shown in FIG. 5, the data transmission method provided by the embodiments of the present disclosure may be implemented as the following steps:
In Sd1: the base station sends a third message to the UE; correspondingly, the UE receives the third message sent from the base station. Herein, the third message is used to indicate whether the UE is allowed to report the priority of the HARQ process.

In Sd2: in a case where the third message is used to indicate that the UE is allowed to report the priority of the HARQ process, the base station sends a second message to the UE; correspondingly, the UE receives the second message sent from the base station. Herein, the second message is used to indicate whether the UE reports the priority of the HARQ process.

The second message may be DCI0, and whether the UE is instructed to report the priority of the HARQ process is represented by adding an HPRI field in DCI0. Exemplarily, if the value of the HPRI field is 1, it indicates that the UE is instructed to report the priority of the HARQ process; if the value of the HPRI field is 0, it indicates that the UE is instructed not to report the priority of the HARQ process.

In Sd3: in a case where the second message indicates the UE to report the HARQ process, the UE sends a first message to the base station; correspondingly, the base station receives the first message sent from the UE. Herein, the first message includes the priority of the HARQ process.

In some embodiments, in a case where the second message indicates the UE not to report the HARQ process, the UE does not send the first message to the base station.

In some embodiments, in a case where the second message does not give any indication (for example, the HPRI field is not added in the second message), the UE determines, according to the indication of the third message, whether to send the first message to the base station. For example, in a case where the third message is used to indicate that the UE is allowed to report the priority of the HARQ process, the UE sends the first message to the base station; in a case where the third message is used to indicate that the UE is not allowed to report the priority of the HARQ process, the UE does not send the first message to the base station (i.e., the above step Sd3 is not performed).

In some embodiments, the first message may be UCI, and the priority of the HARQ process is indicated by adding an HPI field in the UCI. For example, the HPI field may occupy 4 bits, where a value may be from 0 to 15, and a smaller value indicates a higher priority.

In some embodiments, the UE determines the priority of the HARQ process according to a priority of data transmitted by the HARQ process. For example, for a certain HARQ process, when the UE performs packet assembly for high-priority data, the HPI field is configured to a smaller value.

In some embodiments, the first message is transmitted via a PUSCH or a PUCCH. For example, when the UE needs to send a high-priority signaling, the UE may carry the UCI while sending the PUSCH, and indicate a smaller HPI value.

It can be understood that, based on the method provided by the above implementation 1, the UE may determine the priority of the HARQ process according to the priority of the data transmitted by each HARQ process. In this way, the base station may determine the priority of the data transmitted by the HARQ process according to the priority of the HARQ process. Thus, during data transmission, the base station may perform resource scheduling for the re-transmission data of the HARQ process according to the priority of the HARQ process, so as to ensure that high-priority re-transmission data is preferentially scheduled, thereby improving reliability of the re-transmission data of the HARQ process.

Implementation 2: the base station configures a priority of a HARQ process.

In some embodiments, the base station may configure the priority of the HARQ process according to a HARQ ID. Exemplarily, the base station may configure three levels of HARQ process priorities (High, Middle, Low):
High: HARQ ID 0, HARQ ID 1;
Middle: HARQ ID 2, HARQ ID 3, HARQ ID 4, HARQ ID 5;
Low: HARQ ID 6, HARQ ID 7.

In some embodiments, performing data transmission based on the priority of the HARQ process configured by the base station includes the following contents:

### (1) Data transmission for uplink newly transmitted data.

In some embodiments, for uplink newly transmitted data, the base station may allocate HARQ processes to multiple UEs according to the HARQ process priorities. Specifically, the base station may allocate appropriate HARQ processes according to priorities of the multiple UEs, priorities of scheduling requests of the UEs, and priorities of the HARQ process.

For example, in a case where the base station receives scheduling requests from multiple UEs, a high-priority HARQ process may be allocated to a high-priority UE, and a low-priority HARQ process may be allocated to a low-priority UE, according to the priorities of the multiple UEs.

For example, in a case where the base station receives scheduling requests from multiple UEs, and the priorities of the multiple UEs are the same, a high-priority HARQ process may be allocated to a high-priority scheduling request, and a low-priority HARQ process may be allocated to a low-priority scheduling request, according to the priorities of the scheduling requests of the multiple UEs.

For example, in a case where the base station receives multiple scheduling requests from the same UE, a high-priority HARQ process may be allocated to a high-priority scheduling request, and a low-priority HARQ process may be allocated to a low-priority scheduling request, according to the priorities of the multiple scheduling requests.

In some embodiments, for uplink newly transmitted data, when the UE performs packet assembly, the UE may assemble the data according to the priority of the HARQ process and priorities of logical channels, so as to ensure that high-priority data is preferentially assembled into a packet. For example, for HARQ1 process, if the priority of the HARQ1 process is relatively high, the UE performs packet assembly for data of a high-priority logical channel as to-be-transmitted data of the HARQ1 process.

### (2) Data transmission for uplink re-transmission data.

In some embodiments, for uplink re-transmission data, the base station may allocate transmission resources to HARQ processes according to priorities of the HARQ process. For example, a transmission resource for re-transmission data of a high-priority HARQ process is earlier in time domain than a transmission resource for re-transmission data of a low-priority HARQ process. Thus, it can be ensured that high-priority retransmission data is preferentially scheduled.

### (3) Data transmission for downlink newly transmitted data.

In some embodiments, for downlink newly transmitted data, the base station may determine to-be-transmitted data of a HARQ process according to a priority of to-be-transmitted data and priorities of multiple HARQ processes; and then send the to-be-transmitted data of the HARQ process. Thus, it can be ensured that high-priority data is preferentially scheduled, thereby improving reliability of newly transmitted data of the HARQ process.

### (4) Data transmission for downlink re-transmission data.

In some embodiments, for downlink re-transmission data, the base station may allocate transmission resources to HARQ processes according to priorities of the HARQ process. For example, a transmission resource for re-transmission data of a high-priority HARQ process is earlier in time domain than a transmission resource for re-transmission data of a low-priority HARQ process. Thus, it can be ensured that high-priority retransmission data is preferentially scheduled.

Implementation 3: the priority of the HARQ process is determined based on a predefined rule.

Exemplarily, the predefined rule may be that: the priority of the HARQ process is related to a value of a HARQ ID. For example, the smaller the HARQ ID, the higher the priority of a corresponding HARQ process.

In some embodiments, performing data transmission based on the priority of the HARQ process determined by the predefined rule includes the following contents:

### (1) Data transmission for uplink newly transmitted data.

In some embodiments, for uplink newly transmitted data, the base station may allocate HARQ processes to multiple UEs according to the HARQ process priorities. Specifically, the base station may allocate appropriate HARQ processes according to priorities of the multiple UEs, priorities of scheduling requests of the UEs, and the HARQ process priorities.

Exemplarily, for the manner in which the base station allocates HARQ processes according to priorities of the HARQ process priorities, reference may be made to the content in the above implementation 2, and details are not repeated herein.

In some embodiments, for uplink newly transmitted data, the UE may performs data packet assembly according to the priority of the HARQ process and priorities of logical channels, so as to ensure that high-priority data is preferentially assembled.

### (2) Data transmission for uplink re-transmission data.

In some embodiments, for uplink re-transmission data, the base station may allocate transmission resources for re-transmission data of HARQ processes according to the HARQ process priorities. Thus, it can be ensured that re-transmission data of a high-priority HARQ process is scheduled earlier than re-transmission data of a low-priority HARQ process.

### (3) Data transmission for downlink newly transmitted data.

In some embodiments, for downlink newly transmitted data, the base station may determine to-be-transmitted data of a HARQ process according to a priority of to-be-transmitted data and priorities of multiple HARQ processes; and then send the to-be-transmitted data of the HARQ process. Thus, it can be ensured that high-priority data is preferentially scheduled, thereby improving reliability of newly transmitted data of the HARQ process.

### (4) Data transmission for downlink re-transmission data.

In some embodiments, for downlink re-transmission data, the base station may allocate transmission resources for re-transmission data of HARQ processes according to the HARQ process priorities. For example, a transmission resource for re-transmission data of a high-priority HARQ process is earlier in time domain than a transmission resource for re-transmission data of a low-priority HARQ process. Thus, it can be ensured that high-priority re-transmission data is preferentially scheduled.

The above mainly introduces the solutions of the embodiments of the present disclosure from the perspective of methods. It can be understood that, in order to implement the above functions, a data transmission apparatus includes at least one of corresponding hardware structures and software modules for performing the various functions. A person skilled in the art should easily realize that, in combination with the units and algorithm steps of the examples described in the embodiments disclosed herein, the embodiments of the present disclosure can be implemented in the form of hardware or a combination of hardware and computer software. Whether a function is executed in a manner of hardware or computer software driving hardware depends on a specific application and design constraint conditions of the technical solution. A professional technician may use different methods for each specific application to implement the described functions, but such implementation should not be considered as exceeding the scope of the embodiments of the present disclosure.

In the embodiments of the present disclosure, functional modules may be divided for the data transmission apparatus according to the above method embodiments. For example, each function may be divided corresponding to each functional module, or two or more functions may be integrated into one functional module. The above integrated modules may be implemented either in the form of hardware or in the form of software. It should be noted that the division of modules in the embodiments of the present disclosure is schematic and is only a logical function division. In actual implementation, there may be other division manners. The following description will be given by taking the division of each function into a corresponding functional module as an example.

FIG. 6 is a structural diagram of a data transmission apparatus provided by the embodiments of the present disclosure. The data transmission apparatus is applied to a first node, and can execute the data transmission method provided by the above method embodiments. As shown in FIG. 6, the data transmission apparatus 600 includes: a determination module 601. In some other embodiments, the data transmission apparatus 600 further includes: a communication module 602.

The determination module 601 is configured to determine a priority of a HARQ process.

The determination module 601 is further configured to generate to-be-transmitted data of the HARQ process according to the priority of the HARQ process.

In some embodiments, the priority of the HARQ process is determined by one of the following ways: the priority of the HARQ process is determined by the first node and reported; a fourth message sent from a second node is received, wherein the fourth message includes the priority of the HARQ process; or the priority of the HARQ process is determined based on a predefined rule.

In some embodiments, in a case where the priority of the HARQ process is determined by the first node and reported, the communication module 602 is configured to send a first message to the second node, wherein the first message includes the priority of the HARQ process.

In some embodiments, the communication module 602 is further configured to receive a second message sent from the second node, wherein the second message is used to indicate whether the first node reports the priority of the HARQ process.

In some embodiments, the communication module 602 is further configured to receive a third message sent from the second node, wherein the third message is used to indicate whether the first node is allowed to report the priority of the HARQ process.

In some embodiments, the first message is transmitted via a physical shared channel; or, the first message is transmitted via a physical control channel.

In some embodiments, re-transmission data of a high-priority HARQ process is scheduled earlier than data of a low-priority HARQ process.

In some embodiments, the determination module 601 is further configured to perform data packet assembly based on the priority of the HARQ process and priorities of multiple logical channels, to determine the to-be-transmitted data of the HARQ process; and the communication module 602 is further configured to send the to-be-transmitted data of the HARQ process.

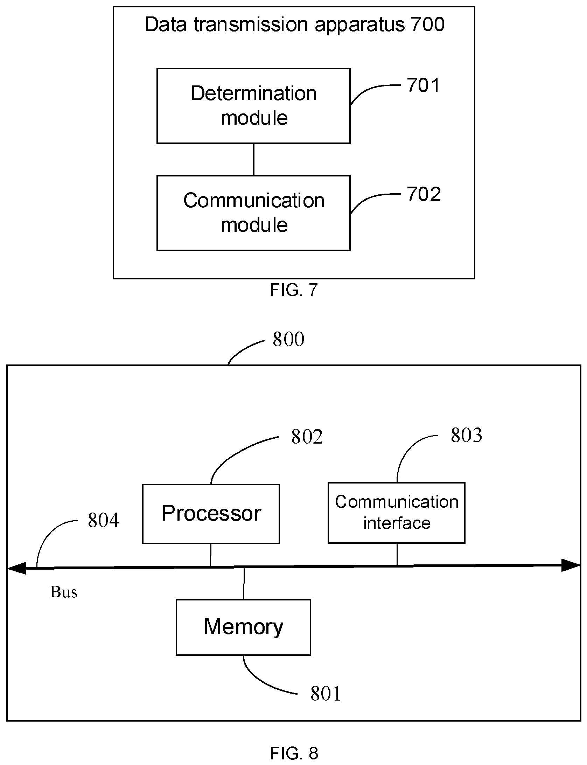

FIG. 7 is a structural diagram of another data transmission apparatus provided by the embodiments of the present disclosure. The data transmission apparatus is applied to a second node, and can execute the data transmission method provided by the above method embodiments. As shown in FIG. 7, the data transmission apparatus 700 includes: a determination module 701 and a communication module 702.

The determination module 701 is configured to acquire a priority of a HARQ process;
the communication module 702 is configured to schedule re-transmission data of the HARQ process according to the priority of the HARQ process.

In some embodiments, the priority of the HARQ process is acquired by one of the following ways: a first message sent from a first node is received, wherein the first message includes the priority of the HARQ process; the priority of the HARQ process is configured by the second node; or the priority of the HARQ process is determined based on a predefined rule.

In some embodiments, the communication module 702 is further configured to send a second message to the first node, wherein the second message is used to indicate whether the first node reports the priority of the HARQ process.

In some embodiments, the communication module 702 is further configured to send a third message to the first node, wherein the third message is used to indicate whether the first node is allowed to report the priority of the HARQ process.

In some embodiments, the first message is transmitted via a physical shared channel; or, the first message is transmitted via a physical control channel.

In some embodiments, in a case where the priority of the HARQ process is configured by the second node, the communication module 702 is further configured to send a fourth message to the first node, wherein the fourth message includes the priority of the HARQ process.

In some embodiments, re-transmission data of a high-priority HARQ process is scheduled earlier than re-transmission data of a low-priority HARQ process.

In a case where the functions of the above integrated modules are implemented in the form of hardware, the embodiments of the present disclosure provide a possible structure of the communication apparatus involved in the above embodiments. As shown in FIG. 8, the communication apparatus 800 includes: a processor 802 and a bus 804. Optionally, the communication apparatus may further include a memory 801; optionally, the communication apparatus 800 may further include a communication interface 803.

The processor 802 may be a device implementing or executing various exemplary logic blocks, modules, and circuits described in combination with the embodiments of the present disclosure. The processor 802 may be a central processing unit, a general-purpose processor, a digital signal processor, an application-specific integrated circuit, a field programmable gate array or other programmable logic devices, a transistor logic device, a hardware component, or any combination thereof. The processor 802 may implement or execute various exemplary logic blocks, modules, and circuits described in combination with the embodiments of the present disclosure. The processor 802 may also be a combination implementing a computing function, for example, a combination containing one or more microprocessors, a combination of a DSP and a microprocessor, etc.

The communication interface 803 is configured to connect to other devices through a communication network. The communication network may be Ethernet, a radio access network, a wireless local area network (WLAN), etc.

The memory 801 may be a read-only memory (ROM) or other types of static storage devices that can store static information and instructions, a random access memory (RAM) or other types of dynamic storage devices that can store information and instructions, or may be an electrically erasable programmable read-only memory (EEPROM), a magnetic disk storage medium or other magnetic storage devices, or any other medium that can be used to carry or store desired program codes in the form of instructions or data structures and can be accessed by a computer, but is not limited thereto.

As a possible implementation, the memory 801 may exist independently of the processor 802. The memory 801 may be connected to the processor 802 through the bus 804, and is configured to store instructions or program codes. When the processor 802 calls and executes the instructions or program codes stored in the memory 801, the data transmission method provided by the embodiments of the present disclosure can be implemented. In another possible implementation, the memory 801 may also be integrated with the processor 802.

The bus 804 may be an extended industry standard architecture (EISA) bus, etc. The bus 804 may be classified into an address bus, a data bus, a control bus, etc. For ease of representation, only one thick line is used to represent the bus in FIG. 8, but it does not mean that there is only one bus or one type of bus.

Some embodiments of the present disclosure provide a computer-readable storage medium (e.g., a non-transitory computer-readable storage medium). The computer-readable storage medium has computer program instructions stored therein. When the computer program instructions are run on a computer, the computer executes the data transmission method described in any one of the above embodiments.

Exemplarily, the above computer-readable storage medium may include, but is not limited to: magnetic storage devices (e.g., a hard disk, a floppy disk, or a magnetic tape, etc.), optical disks (e.g., a Compact Disk (CD), a Digital Versatile Disk (DVD), etc.), smart cards, and flash memory devices (e.g., an Erasable Programmable Read-Only Memory (EPROM), a card, a stick, or a key drive, etc.). The various computer-readable storage media described in the present disclosure may represent one or more devices and/or other machine-readable storage media for storing information. The term "machine-readable storage medium" may include, but is not limited to, wireless channels and various other media capable of storing, containing, and/or carrying instructions and/or data.

The embodiments of the present disclosure provide a computer program product containing instructions. When the computer program product is run on a computer, the computer executes the data transmission method described in any one of the above embodiments.

The above is only a specific implementation of the present disclosure, but the protection scope of the present disclosure is not limited thereto. Any variation or replacement within the technical scope disclosed in the present disclosure shall be covered within the protection scope of the present disclosure. Therefore, the protection scope of the present disclosure shall be subject to the protection scope of the claims.

## Claims

1. A data transmission method, applied to a first node, wherein the method comprises:
determining a priority of a HARQ process; and
generating to-be-transmitted data of the HARQ process according to the priority of the HARQ process.

2. The method according to claim 1, wherein the priority of the HARQ process is determined by one of following ways:
the priority of the HARQ process is determined and reported by the first node;
receiving a fourth message sent from a second node, wherein the fourth message comprises the priority of the HARQ process; or
the priority of the HARQ process is determined based on a predefined rule.

3. The method according to claim 2, wherein, in response to the priority of the HARQ process being determined and reported by the first node, the method further comprises:
sending a first message to the second node, wherein the first message comprises the priority of the HARQ process.

4. The method according to claim 3, wherein, before sending the first message to the second node, the method further comprises:
receiving a second message sent from the second node, wherein the second message is used to indicate whether the first node reports the priority of the HARQ process.

5. The method according to claim 4, wherein, before receiving the second message sent from the second node, the method further comprises:
receiving a third message sent from the second node, wherein the third message is used to indicate whether the first node is allowed to report the priority of the HARQ process.

6. The method according to claim 3, wherein the first message is transmitted via a physical shared channel; or, the first message is transmitted via a physical control channel.

7. The method according to claim 1, wherein re-transmission data of a high-priority HARQ process is scheduled earlier than re-transmission data of a low-priority HARQ process.

8. The method according to claim 1, wherein the method further comprises:
performing data packet assembly based on the priority of the HARQ process and priorities of multiple logical channels, to determine the to-be-transmitted data of the HARQ process; and
sending the to-be-transmitted data of the HARQ process.

9. A data transmission method, applied to a second node, wherein the method comprises:
acquiring a priority of a HARQ process; and
scheduling re-transmission data of the HARQ process according to the priority of the HARQ process.

10. The method according to claim 9, wherein the priority of the HARQ process is acquired by one of following ways:
receiving a first message sent from a first node, wherein the first message comprises the priority of the HARQ process;
the priority of the HARQ process is configured by the second node; or
the priority of the HARQ process is determined based on a predefined rule.

11. The method according to claim 10, wherein, before receiving the first message sent from the first node, the method further comprises:
sending a second message to the first node, wherein the second message is used to indicate whether the first node reports the priority of the HARQ process.

12. The method according to claim 11, wherein, before sending the second message to the first node, the method further comprises:
sending a third message to the first node, wherein the third message is used to indicate whether the first node is allowed to report the priority of the HARQ process.

13. The method according to claim 10, wherein the first message is transmitted via a physical shared channel; or, the first message is transmitted via a physical control channel.

14. The method according to claim 9, wherein, in response to the priority of the HARQ process being configured by the second node, the method further comprises:
sending a fourth message to the first node, wherein the fourth message comprises the priority of the HARQ process.

15. The method according to claim 9, wherein retransmission data of a high-priority HARQ process is scheduled earlier than retransmission data of a low-priority HARQ process.

16. A communication apparatus, comprising: a memory and a processor, wherein the memory and the processor are coupled; the memory is configured to store instructions executable by the processor; and the processor, upon executing the instructions, implements the data transmission method according to any one of claims 1 to 15.

17. A computer-readable storage medium, having computer instructions stored thereon, wherein the computer instructions, upon being run on an electronic device, enable the electronic device to implement the data transmission method according to any one of claims 1 to 15.
